# EUROPEAN PATENT SPECIFICATION

(11) **EP 3 840 148 B1**
(45) Date of publication and mention of the grant of the patent: **26.07.2023**
(21) Application number: 19218845.6
(22) Date of filing: 20.12.2019
(51) Int. Cl.: H02G 3/00, H02G 3/10, H02G 1/00, G01C 9/26

(54) **ELECTRICAL DEVICE**
ELEKTRISCHE VORRICHTUNG
DISPOSITIF ÉLECTRIQUE

(43) Date of publication of application: 23.06.2021
(73) Proprietor: Berker GmbH & Co. KG, 58579 Schalksmühle (DE)
(72) Inventor: Barbero, Andrea, 25086 REZZATO (BS) (IT); Guidetti, Fabrizio, 25077 ROE' VOLCIANO (BS) (IT); Paderno, Alberto, 25010 MONTIRONE (BS) (IT); Ward, Ian, GLENDENNING, NSW 2761 (AU)
(74) Representative: Cabinet Nuss

(56) References cited:
- EP-A1- 2 683 045
- EP-A2- 2 575 224
- CN-U- 207 183 987
- DE-U1-202005 009 888

## Description

The invention relates to the field of electrical appliances or devices and in particular an electrical device to be mounted to a wall. The electrical device comprises a mounting frame having a base plate. The electrical device can typically include fittings such as for example power outlets, switches, telephone or data connection points, timers, chargers or dimmers, or combinations thereof.

Within buildings such as houses, electricians commonly install many electrical devices each comprising one or more of the above-mentioned fittings. Those electrical devices are usually mounted to a wall and fixed to the wall via fixation screws. Before a permanent fixation of the electrical device to the wall, the electrical device needs to be correctly aligned with respect to a horizontal plane.

Electrical devices to be mounted to a wall are known. Those electrical devices usually have a plurality of elongated fixation holes allowing for an adjustment and/or levelling of the electrical device before a definitive fixation of the electrical device on the wall. With those known electrical devices, the levelling is uneasy because it is generally made with the same hand which either holds the mounting frame or a spirit level held against the mounting frame, while the other hand operates the fixation screw. Alternatively, the mounting frame is forced into the horizontal position with the fixing screw partially screwed on, with the risk of damaging the mounting frame itself.

Relevant prior art is disclosed in CN207 183987U which shows a mounting frame for mounting an electrical device, the mounting frame comprising a base frame and an inner frame that slides inside the base frame and that can be fixed to the base frame by means of screws. Further prior art can be found in DE202005009888 U1, EP2 5752242, EP2683045A1.

This invention has as its object to remedy to these drawbacks by proposing an electrical device and a method for mounting such an electrical device.

For this purpose, the present invention has as its object an electrical device to be mounted to a wall, comprising a mounting frame having a base plate. The electrical device further comprises at least one fixation and levelling device for fixing the electrical device to the wall and for levelling the electrical device with respect to a horizontal plane. The fixation and levelling device comprises a fixation element being moveably mounted on the base plate and having at least one fixation opening for receiving a fixation screw.

According to the invention, the base plate further comprises an orifice for feeding through the fixation screw, the orifice preferably having the shape of an elongated hole or a curvilinear elongated hole.

Preferably, the mounting frame further comprises a spirit level mounted on the base plate.

According to the invention, the fixation element is slidable on the base plate along a path of displacement, the path of displacement being preferably linear or curvilinear.

Preferably, the at least one fixation and levelling device further comprises an adjustment element mounted on the base plate and engaging the fixation element.

In a preferred embodiment, the adjustment element is rotatably mounted on the base plate.

Preferably, the adjustment element comprises a protrusion and the fixation element comprises a slot, the protrusion engaging the slot.

In a preferred embodiment, the adjustment element comprises a head portion configured to receive a tip of a screw driver.

Preferably, the fixation element is rotatably mounted on the base plate.

In a preferred embodiment, the fixation element comprises a receiving portion for receiving a tip of a screw driver.

The method for mounting an electrical device according to the invention comprises the following steps:
- providing an electrical device according to the invention;
- arranging the electrical device in an opening or a cavity of the wall;
- providing at least a fixation screw;
- inserting the fixation screw into the fixation opening of the fixation element of the fixation and levelling device of the electrical device and into a borehole present in the wall in vicinity of the opening or cavity of the wall; and
- rotating or displacing the fixation element on the baseplate in order to level the electrical device with respect to a horizontal plane.

Preferably, the fixation element is displaced on the base plate along a linear or curvilinear path of displacement.

In a preferred embodiment, the fixation element is displaced by moving the adjustment element, preferably by rotating the adjustment element.

Preferably, the fixation element is displaced by engaging a tip of a screw driver in the head portion of the adjustment element and by turning the screw driver.

In a preferred embodiment, the fixation element is displaced by engaging a tip of a screw driver in the receiving portion and by moving and/or turning the screw driver.

The invention will be better understood using the description below, which relates to three preferred embodiments, given by way of nonlimiting examples and explained with reference to the accompanying drawings, in which
- figures 1 to 3 show an electrical device according to the invention in a first embodiment;
- figures 4 and 5 each show a detailed view of the electrical device according to the invention in a second embodiment;
- figure 6 and 7 each show a detailed view of the electrical device according to the invention in the first embodiment;
- figures 8 and 9 each show a detailed view of the electrical device according to the invention in a third embodiment;
- figure 10 shows a schematic view of the electrical device according to any one of the exemplary embodiments; and
- figure 11 shows a sectional view of the electrical device according to any one of the exemplary embodiments mounted on a wall.

The present application relates to an electrical device 20 to be mounted to a wall 100, comprising a mounting frame 30 having a base plate 32. The electrical device 20 further comprises at least one fixation and levelling device 40 for fixing the electrical device 20 to the wall 100 and for levelling the electrical device 20 with respect to a horizontal plane H, the fixation and levelling device 40 comprising a fixation element 50 being moveably mounted on the base plate 32 and having at least one fixation opening 52 for receiving a fixation screw 110.

The present application also relates to a method for mounting an electrical device 20, comprising the following steps:
- providing an electrical device 20 according to the application;
- arranging the electrical device 20 in an opening or a cavity of the wall 100;
- providing at least a fixation screw 110;
- inserting the fixation screw 110 into the fixation opening 52 of the fixation element 50 of the fixation and levelling device 40 of the electrical device 20 and into a borehole present in the wall 100 in vicinity of the opening or cavity of the wall 100; and
- rotating or displacing the fixation element 50 on the baseplate 32 in order to level the electrical device 20 with respect to a horizontal plane H.

According to the present application, the levelling and/or adjusting of the electric device 20 with respect to the horizontal plane H can easily be achieved and can be performed after the fixation of the electrical device 20 into the opening or the cavity of the wall 100 by displacing the fixation element 50 in relation to the baseplate 32.

Inserting the fixation screw 110 into the borehole can be achieved by introducing a wall plug into the borehole and by screwing the fixation screw 110 into the wall plug.

The screwing of the fixation screw 110 into the wall plug can be done sufficiently loosely to still permit the displacement of the fixation element 50.

Once the fixation element 50 has been displaced and the electrical device 20 has been levelled with respect to the horizontal plane H, the fixation screw 110 can be further tightened. A further tightening of the fixation screw 110 can cause the fixation element 50 to be pressed against the base plate 32, thereby holding the fixation element in place on the base plate 32, preferably due to friction between the base plate 32 and the fixation element 50.

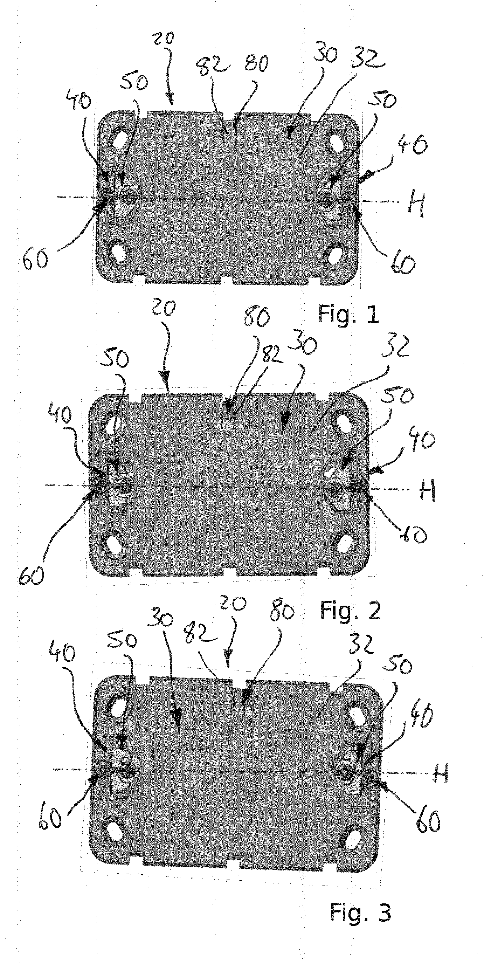

The electric device 20 according to all of the exemplary embodiments can comprise two fixation and levelling devices 40, one respectively on each side of the mounting frame 30, as depicted in figures 1 to 3.

The base plate 32 can further comprise an orifice 34 for feeding through the fixation screw 110, the orifice 34 preferably having the shape of an elongated hole or a curvilinear elongated hole. The orifice 34 is shaped in such a way to permit the feeding through of the fixation screw 110 independently of the position of the fixation element 50 on the base plate 32.

The mounting frame 30 can further comprise a spirit level 80 mounted on the base plate 32.

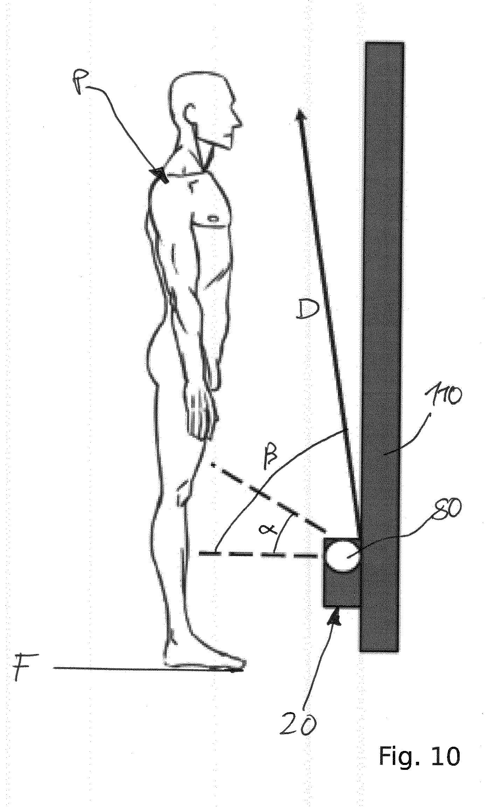

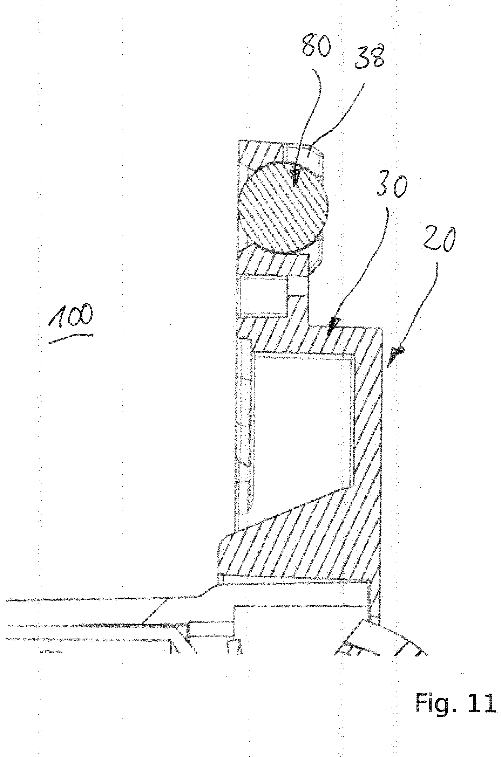

The mounting frame 30 can comprise a cut-out portion 38 allowing for the spirit level 80 to be visible at least in a viewing direction D which is substantially parallel to a surface of the wall 100. This embodiment is depicted in particular in figures 10 and 11.

The spirit level 80 can be fastened on an upper edge of the mounting frame 30. The spirit level 80 can comprise a central portion 82, the cut-out portion 38 being positioned next to the central portion 82 of the spirit level 80, preferably above the central portion 82 of the spirit level 80.

When the electrical device 20 is correctly horizontally aligned, an air bubble of the spirit level 80 is positioned in the central portion 82. The central portion 82 of the spirit level 80 can be delimited by two markings. The cut-out portion 38 is preferably larger than the central portion 82 in the longitudinal direction of the spirit level 80.

The cut-out portion 38 can extend up to the surface of the wall 100. This allows for a better visibility of the spirit level 80 in a viewing direction parallel to the wall 100. The cut-out portion 38 can be of trapezoidal shape. The smaller base of the trapezoid formed by the cut-out portion 38 can be arranged next to the wall 100.

As depicted in particular in figures 10 and 11, due to the cut-out portion 38, the spirit level 80 is visible at least in the viewing direction D which is substantially parallel to a surface of the wall 100. This facilitates the visibility of the spirit level 80 for a person P installing the device 20 on the wall 100, in particular when the electrical device 20 is installed near the floor level F, as depicted in figure 10.

The cut-out portion 38 also enables a bigger viewing angle β as compared to a viewing angle α of an electrical device without such a cut-out portion 38, as shown in figure 10.

The fixation element 50 can be slidable on the base plate 32 along a path of displacement, the path of displacement being preferably linear or curvilinear. The path of displacement can further be parallel to the base plate 32. The orifice 34 can have a shape which corresponds to the path of displacement of the fixation element 50.

According to the first embodiment depicted in figures 1 to 3, 6 and 7, the path of displacement of the fixation element 50 of the electrical device 20 can be linear.

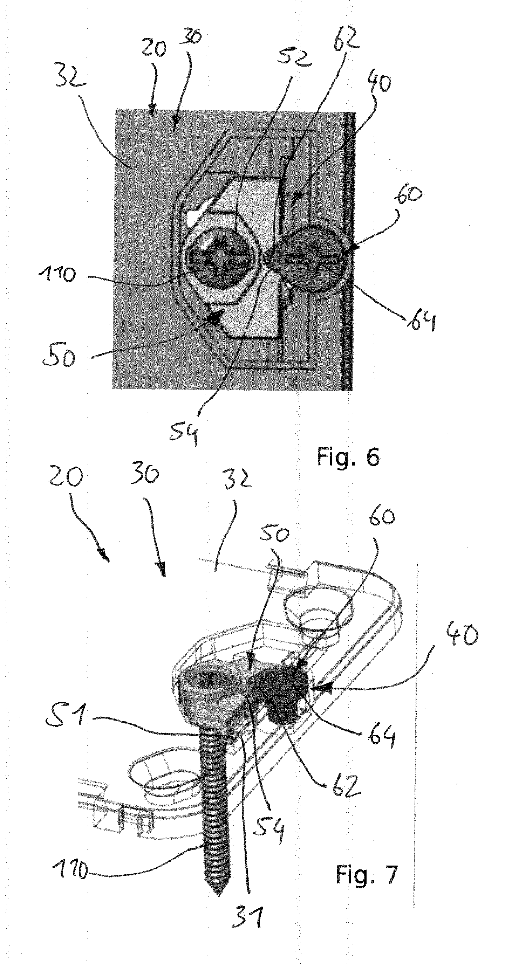

Therefore, the fixation element 50 can comprise at least a guiding element 51 engaging in a guiding rail 31 of the base plate 32, as depicted in figure 7. The guiding rail 31 can be of rectilinear or curvilinear shape.

Correspondingly, the method can comprise a further step consisting of displacing the fixation element 50 on the base plate 32 along a linear or curvilinear path of displacement.

According to the first embodiment depicted in figures 1 to 3, 6 and 7, the at least one fixation and levelling device 40 can further comprise an adjustment element 60 mounted on the base plate 32 and engaging the fixation element 50. The adjustment element 60 can be rotatably mounted on the base plate 32.

Correspondingly, the fixation element 50 can be displaced by moving the adjustment element 60, preferably by rotating the adjustment element 60.

The adjustment element 60 can comprise a protrusion 62 and the fixation element 50 can comprise a slot 54, the protrusion 62 engaging the slot 54.

In an alternative embodiment (not shown in the figures), the adjustment element 60 can comprise a slot and the fixation element 50 can comprise a protrusion, the protrusion engaging the slot.

In this way, a rotation of the adjustment element 60 can produce a displacement of the fixation element 50 along the path of displacement.

The adjustment element 60 can comprise a head portion 64 configured to receive a tip of a screw driver.

The adjustment element 60 can be rotatable around an axis, the protrusion 62 extending radially from this axis.

Correspondingly, the method can comprise a further step consisting of displacing the fixation element by engaging a tip of a screw driver in the head portion of the adjustment element and by turning the screw driver.

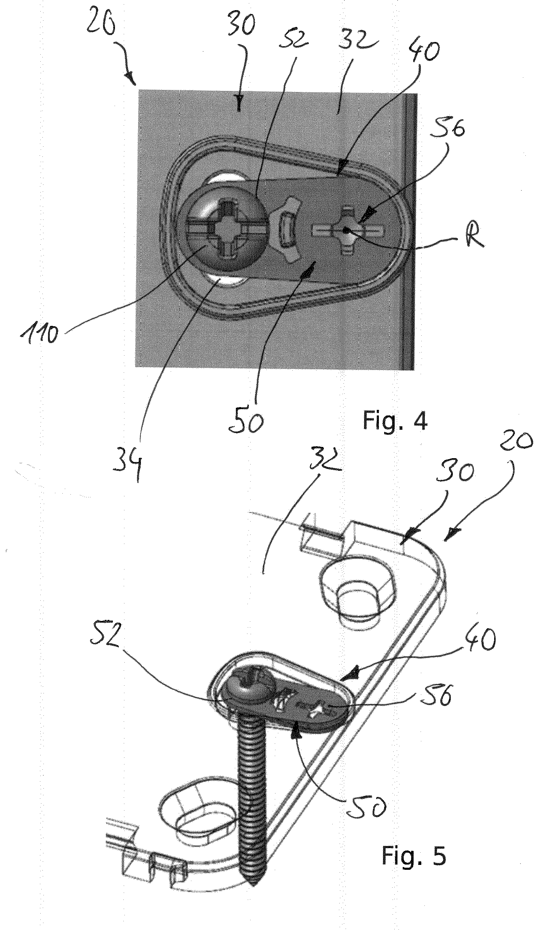

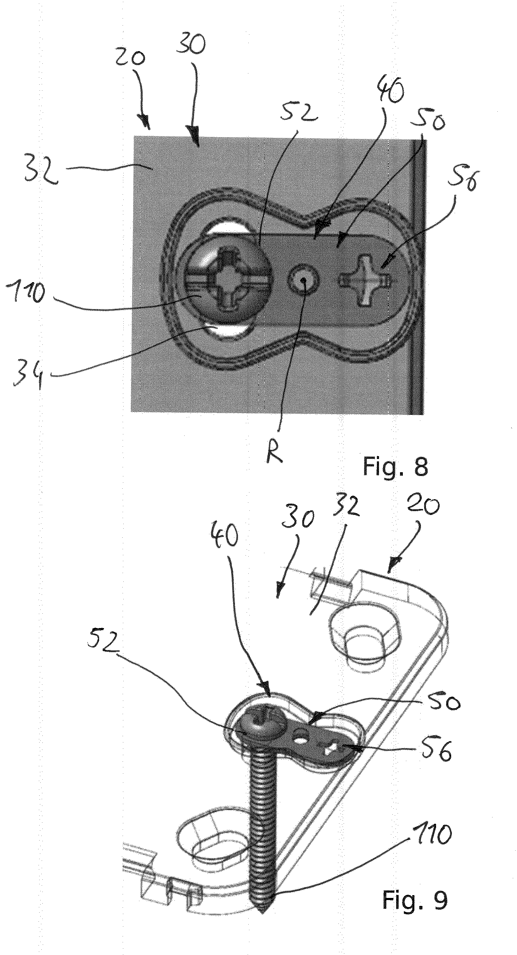

According to the second and third embodiments depicted in figures 4, 5, 8 and 9, the fixation element 50 can be rotatably mounted on the base plate 32, preferably around an axis of rotation R, as depicted in figures 5 and 8. According to those embodiments, the electrical device 20 can be free of an adjustment element 60.

The fixation element 50 can comprise a receiving portion 56 for receiving a tip of a screw driver. The receiving portion 56 can be located in prolongation of the axis of rotation R, as depicted in figure 4, or radially spaced from the axis of rotation R, as depicted in figure 8.

Correspondingly, the method can comprise a further step consisting of displacing the fixation element 50 by engaging a tip of a screw driver in the receiving portion 56 and by moving, in particular along a curvilinear path of displacement, and/or turning the screw driver.

The electrical device 20 according to the present application can easily be mounted to the wall 100 by securing the fixation element 50 to the wall 100 by means of a fixation screw 110. The electrical device 20 can further be levelled and/or aligned with the horizontal plane H or adjusted by displacing the fixation element 50 on the baseplate 32 until the electrical device is levelled and/or horizontally aligned.

Of course, the invention is not limited to the at least one embodiment described and represented in the accompanying drawings. Modifications remain possible, particularly from the viewpoint of the composition of the various elements or by substitution of technical equivalents without thereby exceeding the field of protection of the invention.

## Claims

1. Electrical device (20) to be mounted to a wall (100), comprising a mounting frame (30) having a base plate (32), and further comprising at least one fixation and levelling device (40) for fixing the electrical device (20) to the wall (100) and for rotating the electrical device (20) with respect to a horizontal plane (H) when fixed to the wall (100), wherein the base plate (32) comprises an orifice (34) for feeding through a fixation screw (110), wherein the fixation and levelling device (40) comprises a fixation element (50) that partially overlaps the base plate (32), which fixation element is mounted on the base plate (32), rotatable or slidable along a path of displacement, and has at least one fixation opening (52) for receiving the fixation screw (110), and wherein the fixation element (50), or an adjustment element (60) coupled with the fixation element (50), engages with the base plate (32), for translating a displacement or rotation of the fixation element (50) or a rotation of the adjustment element (60) into a rotation or displacement of the base plate (32) in relation to the fixation screw (110).

2. Electrical device according to claim 1, wherein the orifice (34) has the shape of an elongated hole or a curvilinear elongated hole.

3. Electrical device according to any one of the claims 1 or 2, wherein the mounting frame (30) further comprises a spirit level (80) mounted on the base plate (32).

4. Electrical device according to any one of the claims 1 to 3, wherein the path of displacement of fixation element (50) is linear or curvilinear.

5. Electrical device according to any one of the claims 1 to 4, wherein the adjustment element (60) is rotatably mounted on the base plate (32).

6. Electrical device according to any one of the claims 1 to 5, wherein the adjustment element (60) comprises a protrusion (62) and in that the fixation element (50) comprises a slot (54), the protrusion (62) engaging the slot (54).

7. Electrical device according to any one of the claims 1 to 6, wherein the adjustment element (60) comprises a head portion (64) configured to receive a tip of a screw driver.

8. Electrical device according to any one of the claims 1 to 3, wherein the fixation element (50) is rotatably mounted on the base plate (32).

9. Electrical device according to claim 8, wherein the fixation element (50) comprises a receiving portion (56) for receiving a tip of a screw driver.

10. Method for mounting an electrical device (20), comprising the following steps:
- providing an electrical device (20) according to one of the claims 1 to 9;
- arranging the electrical device (20) in an opening or a cavity of the wall (100);
- providing at least a fixation screw (110);
- inserting the fixation screw (110) into the fixation opening (52) of the fixation element (50) of the fixation and levelling device (40) of the electrical device (20) and into a borehole present in the wall (100) in vicinity of the opening or cavity of the wall (100); and
- rotating or displacing the fixation element (50) on the baseplate (32) in order to level the electrical device (20) with respect to a horizontal plane (H).

11. Method according to claim 10, the electrical device (20) being an electrical device (20) according to one of the claims 4 to 9, wherein the fixation element (50) is displaced on the base plate (32) along a linear or curvilinear path of displacement.

12. Method according to any one of the claims 10 or 11, the electrical device (20) being an electrical device (20) according to one of the claims 5 to 7, wherein the fixation element (50) is displaced by moving the adjustment element (60), preferably by rotating the adjustment element (60).

13. Method according to claim 12, the electrical device (20) being an electrical device (20) according to claim 7, wherein the fixation element (50) is displaced by engaging a tip of a screw driver in the head portion (64) of the adjustment element (60) and by turning the screw driver.

14. Method according to claim 12, the electrical device (20) being an electrical device (20) according to claim 9, wherein the fixation element (50) is displaced by engaging a tip of a screw driver in the receiving portion (56) and by moving and/or turning the screw driver.

## Patentansprüche

1. Elektrische Vorrichtung (20) zur Montage an einer Wand (100), umfassend einen Montagerahmen (30) mit einer Grundplatte (32), und ferner umfassend mindestens eine Befestigungs- und Ausrichtungsvorrichtung (40) zum Befestigen der elektrischen Vorrichtung (20) an der Wand (100) und zum Drehen der elektrischen Vorrichtung (20) in Bezug auf eine horizontale Ebene (H), wenn diese an der Wand (100) befestigt ist, wobei die Grundplatte (32) einen Durchlass (34) zum Durchführen einer Befestigungsschraube (110) umfasst, wobei die Befestigungs- und Ausrichtungsvorrichtung (40) ein Befestigungselement (50) umfasst, das die Grundplatte (32) teilweise überlagert, wobei das Befestigungselement an der Grundplatte (32) drehbar oder gleitfähig entlang eines Verschiebewegs montiert ist und mindestens eine Befestigungsöffnung (52) zum Aufnehmen der Befestigungsschraube (110) aufweist, und wobei das Befestigungselement (50) oder ein mit dem Befestigungselement (50) gekoppeltes Einstellelement (60) mit der Grundplatte (32) zum Umwandeln einer Verschiebung oder Drehung des Befestigungselements (50) oder einer Drehung des Einstellelements (60) in eine Drehung oder Verschiebung der Grundplatte (32) in Relation zu der Befestigungsschraube (110) in Eingriff kommt.

2. Elektrische Vorrichtung nach Anspruch 1, wobei der Durchlass (34) eine Form eines Langlochs oder eines gekrümmten Langlochs aufweist.

3. Elektrische Vorrichtung nach einem der Ansprüche 1 oder 2, wobei der Montagerahmen (30) ferner eine an der Grundplatte (32) montierte Wasserwaage (80) umfasst.

4. Elektrische Vorrichtung nach einem der Ansprüche 1 bis 3, wobei der Verschiebeweg des Befestigungselements (50) linear oder gekrümmt ist.

5. Elektrische Vorrichtung nach einem der Ansprüche 1 bis 4, wobei das Einstellelement (60) drehbar an der Grundplatte (32) montiert ist.

6. Elektrische Vorrichtung nach einem der Ansprüche 1 bis 5, wobei das Einstellelement (60) einen Vorsprung (62) umfasst und das Befestigungselement (50) einen Schlitz (54) umfasst, wobei der Vorsprung (62) den Schlitz (54) in Eingriff bringt.

7. Elektrische Vorrichtung nach einem der Ansprüche 1 bis 6, wobei das Einstellelement (60) einen Kopfabschnitt (64) umfasst, der dazu ausgelegt ist, eine Spitze eines Schraubendrehers aufzunehmen.

8. Elektrische Vorrichtung nach einem der Ansprüche 1 bis 3, wobei das Befestigungselement (50) drehbar an der Grundplatte (32) montiert ist.

9. Elektrische Vorrichtung nach Anspruch 8, wobei das Befestigungselement (50) einen Aufnahmeabschnitt (56) zum Aufnehmen einer Spitze eines Schraubendrehers umfasst.

10. Verfahren zum Montieren einer elektrischen Vorrichtung (20), umfassend die folgenden Schritte:
- Bereitstellen einer elektrischen Vorrichtung (20) nach einem der Ansprüche 1 bis 9;
- Anordnen der elektrischen Vorrichtung (20) in einer Öffnung oder einem Hohlraum der Wand (100);
- Bereitstellen mindestens einer Befestigungsschraube (110) ;
- Einsetzen der Befestigungsschraube (110) in die Befestigungsöffnung (52) des Befestigungselements (50) der Befestigungs- und Ausrichtungsvorrichtung (40) der elektrischen Vorrichtung (20) und in ein Bohrloch, das in der Wand (100) in der Nähe der Öffnung oder des Hohlraums der Wand (100) vorhanden ist; und
- Drehen oder Verschieben des Befestigungselements (50) an der Grundplatte (32), um die elektrische Vorrichtung (20) in Bezug auf eine horizontale Ebene (H) auszurichten.

11. Verfahren nach Anspruch 10, wobei die elektrische Vorrichtung (20) eine elektrische Vorrichtung (20) nach einem der Ansprüche 4 bis 9 ist, wobei das Befestigungselement (50) an der Grundplatte (32) entlang eines linearen oder gekrümmten Verschiebewegs verschoben wird.

12. Verfahren nach einem der Ansprüche 10 oder 11, wobei die elektrische Vorrichtung (20) eine elektrische Vorrichtung (20) nach einem der Ansprüche 5 bis 7 ist, wobei das Befestigungselement (50) durch Bewegen des Einstellelements (60), vorzugsweise durch Drehen des Einstellelements (60), verschoben wird.

13. Verfahren nach Anspruch 12, wobei die elektrische Vorrichtung (20) eine elektrische Vorrichtung (20) nach Anspruch 7 ist, wobei das Befestigungselement (50) durch Ineingriffbringen einer Spitze eines Schraubendrehers in den Kopfabschnitt (64) des Einstellelements (60) und durch Drehen des Schraubendrehers verschoben wird.

14. Verfahren nach Anspruch 12, wobei die elektrische Vorrichtung (20) eine elektrische Vorrichtung (20) nach Anspruch 9 ist, wobei das Befestigungselement (50) durch Ineingriffbringen einer Spitze eines Schraubendrehers in den Aufnahmeabschnitt (56) und durch Bewegen und/oder Drehen des Schraubendrehers verschoben wird.

## Revendications

1. Dispositif électrique (20) à monter sur un mur (100), comprenant un cadre de montage (30) avec une plaque de base (32), et comprenant en outre au moins un dispositif de fixation et de mise à niveau (40) pour fixer le dispositif électrique (20) au mur (100) et pour faire pivoter le dispositif électrique (20) par rapport à un plan horizontal (H) lorsqu'il est fixé au mur (100), la plaque de base (32) comprenant un orifice (34) pour le passage d'une vis de fixation (110),
le dispositif de fixation et de mise à niveau (40) comprenant un élément de fixation (50) qui recouvre partiellement la plaque de base (32), lequel élément de fixation étant monté sur la plaque de base (32), rotatif ou coulissant le long d'une trajectoire de déplacement, et possédant au moins une ouverture de fixation (52) pour recevoir la vis de fixation (110), et
l'élément de fixation (50), ou un élément de réglage (60) accouplé à l'élément de fixation (50), étant en prise avec la plaque de base (32) pour translater un déplacement ou une rotation de l'élément de fixation (50) ou une rotation de l'élément de réglage (60) en une rotation ou un déplacement de la plaque de base (32) par rapport à la vis de fixation (110).

2. Dispositif électrique selon la revendication 1, l'orifice (34) ayant la forme d'un trou allongé ou d'un trou allongé curviligne.

3. Dispositif électrique selon l'une quelconque des revendications 1 ou 2, le cadre de montage (30) comprenant en outre un niveau à bulle (80) monté sur la plaque de base (32).

4. Dispositif électrique selon l'une quelconque des revendications 1 à 3, la trajectoire de déplacement de l'élément de fixation (50) étant linéaire ou curviligne.

5. Dispositif électrique selon l'une quelconque des revendications 1 à 4, l'élément de réglage (60) étant monté en rotation sur la plaque de base (32).

6. Dispositif électrique selon l'une quelconque des revendications 1 à 5, l'élément de réglage (60) comprenant une saillie (62) et l'élément de fixation (50) comprenant une fente (54), la saillie (62) venant en prise avec la fente (54).

7. Dispositif électrique selon l'une quelconque des revendications 1 à 6, l'élément de réglage (60) comprenant une partie tête (64) conçue pour recevoir une pointe d'un tournevis.

8. Dispositif électrique selon l'une quelconque des revendications 1 à 3, l'élément de fixation (50) étant monté rotatif sur la plaque de base (32).

9. Dispositif électrique selon la revendication 8, l'élément de fixation (50) comprenant une partie de réception (56) destinée à recevoir la pointe d'un tournevis.

10. Procédé de montage d'un dispositif électrique (20), comprenant les étapes consistant à :
fournir un dispositif électrique (20) selon l'une quelconque des revendications 1 à 9 ;
placer le dispositif électrique (20) dans une ouverture ou une cavité du mur (100) ;
fournir au moins une vis de fixation (110) ;
insérer la vis de fixation (110) dans l'ouverture de fixation (52) de l'élément de fixation (50) du dispositif de fixation et de mise à niveau (40) du dispositif électrique (20) et dans un trou de perçage présent dans le mur (100) à proximité de l'ouverture ou de la cavité du mur (100) ; et
faire tourner ou déplacer l'élément de fixation (50) sur la plaque de base (32) afin de mettre le dispositif électrique (20) à niveau par rapport à un plan horizontal (H).

11. Procédé selon la revendication 10, le dispositif électrique (20) étant un dispositif électrique (20) selon l'une quelconque des revendications 4 à 9, l'élément de fixation (50) étant déplacé sur la plaque de base (32) selon une trajectoire de déplacement linéaire ou curviligne.

12. Procédé selon l'une quelconque des revendications 10 ou 11, le dispositif électrique (20) étant un dispositif électrique (20) selon l'une quelconque des revendications 5 à 7, l'élément de fixation (50) étant déplacé en déplaçant l'élément de réglage (60), de préférence en faisant tourner l'élément de réglage (60).

13. Procédé selon la revendication 12, le dispositif électrique (20) étant un dispositif électrique (20) selon la revendication 7, l'élément de fixation (50) étant déplacé en mettant en prise une pointe d'un tournevis dans la partie tête (64) de l'élément de réglage (60) et en tournant le tournevis.

14. Procédé selon la revendication 12, le dispositif électrique (20) étant un dispositif électrique (20) selon la revendication 9, l'élément de fixation (50) étant déplacé en mettant en prise une pointe d'un tournevis dans la partie de réception (56) et en déplaçant et/ou en tournant le tournevis.
